(19) Europäisches Patentamt
European Patent Office
Office européen des brevets

(11) **EP 0 949 492 B1**

(12) **EUROPÄISCHE PATENTSCHRIFT**

(45) Veröffentlichungstag und Bekanntmachung des Hinweises auf die Patenterteilung:
**16.11.2005 Patentblatt 2005/46**

(51) Int Cl.[7]: **G01K 1/12**, G01K 13/02

(21) Anmeldenummer: **98810293.5**

(22) Anmeldetag: **07.04.1998**

(54) **Verfahren zum Messen der Temperatur von heissen Gasen mittels eines Thermoelementes sowie Messanordnung zur Durchführung des Verfahrens**

Method for measuring, by means of a thermocouple, the temperature of hot gases, and measuring device for the realisation of said method

Procédé pour mesurer, avec un thermoélément, la température de gaz chauds, et appareil de mesure appliquant ce procédé

(84) Benannte Vertragsstaaten:
**DE**

(72) Erfinder: **Keller, Jakob, Prof. Dr.**
**5610 Wohlen (CH)**

(43) Veröffentlichungstag der Anmeldung:
**13.10.1999 Patentblatt 1999/41**

(56) Entgegenhaltungen:
**US-A- 3 451 268    US-A- 5 397 181**

(73) Patentinhaber: **Alstom Technology Ltd**
**5400 Baden (CH)**

**Beschreibung**

TECHNISCHES GEBIET

Die vorliegende Erfindung bezieht sich auf das Gebiet der Temperaturmesstechnik. Sie betrifft ein Verfahren zum Messen der Temperatur von in einem Heissgasraum, insbesondere in der Brennkammer von Gasturbinen, vorliegenden heissen Gasen mittels eines Thermoelementes. Die Erfindung betrifft weiterhin eine Messanordnung zur Durchführung eines solchen Verfahrens.

STAND DER TECHNIK

Zur Steuerung und Ueberwachung des Betriebes von Gasturbinen ist es notwendig, in den Brennkammern der Gasturbinen die dort auftretenden hohen Temperaturen der heissen Gase zu messen bzw. zu bestimmen. Eine solche Temperaturmessung stellt die Messtechnik wegen der hohen Temperaturen und der rauhen Umgebung am Messort vor nahezu unüberwindliche Schwierigkeiten. Eine Möglichkeit, diese Schwierigkeiten zu umgehen, besteht darin, die Temperatur der Gase an einer weiter stromabwärts liegenden, kühleren Stelle der Maschine zu messen, und aus den Messdaten auf der Basis eines Maschinenmodells auf die Temperaturen in der Brennkammer zurückzuschliessen. Hierbei ist jedoch nachteilig, dass nur eine sehr indirekte und zeitverzögerte Beziehung zwischen den tatsächlich gemessenen und den zu bestimmenden Temperaturen besteht.

Eine andere Möglichkeit besteht darin, für die Temperaturmessung beispielsweise Thermoelemente aus speziellen Metallen wie Platin und Platin-Rhodium einzusetzen, die den in der Brennkammer auftretenden Heissgastemperaturen widerstehen und daher zu einer Messung direkt in der Brennkammer verwendet werden können. Nachteilig sind dabei jedoch die hohen Kosten, die durch Verwendung der seltenen Metalle insbesondere beim Einsatz mehrerer Messstellen entstehen.

Es ist daher in der GB-A-2 100 003 bereits vorgeschlagen worden, für die Temperaturmessung in Flugzeugturbinen kombinierte Thermoelementanordnungen zu verwenden, die auf zwei abgestuften Temperaturniveaus arbeiten und ein zwischen den beiden Temperaturniveaus angeordnetes, kurzes Hochtemperatur-Thermolement aus Platin/Platin-Rhodium für das erste hohe Temperaturniveau und ein weniger belastbares Kompensations-Thermoelement aus Alumel/Chromel für das zweite niedrigere Temperaturniveau umfassen. Die tatsächliche Temperatur des ersten Temperaturniveaus kann dann aus den Messdaten beider Thermoelemente rechnerisch ermittelt werden. Die Einsparungen an Drahtlänge für das Hochtemperatur-Thermoelement werden hierbei jedoch erkauft durch einen komplizierteren Aufbau der Messsonde und durch eine Verdoppelung der Anzahl der Messungen.

DARSTELLUNG DER ERFINDUNG

Es ist daher Aufgabe der Erfindung, ein Verfahren und eine Messanordnung zur Messung von hohen Heissgastemperaturen, wie sie in den Brennkammern von Gasturbinen auftreten, zu schaffen, die wenig Aufwand erfordern, schnell sichere Ergebnisse liefern, und sich durch einen einfachen und kostengünstigen Aufbau auszeichnen.

Die Aufgabe wird bei einem Verfahren der eingangs genannten Art dadurch gelöst, dass ein Teil der zu messenden heissen Gase auf definierte Weise mit einem kühleren Gas vermischt wird, dass die Temperatur der Gasmischung mittels des Thermoelementes gemessen wird, und dass aus der gemessenen Temperatur der Gasmischung die Temperatur der zu messenden heissen Gase bestimmt wird. Durch die Vermischung mit einem kühleren Gas wird eine Gasmischung mit reduzierter Temperatur erzeugt, die ohne Probleme mit einem weniger temperaturfesten Thermoelement gemessen werden kann. Da die Vermischung auf definierte Weise erfolgt, kann ohne Schwierigkeiten aus der Temperatur der Gasmischung auf die ursprüngliche Temperatur der heissen Gase zurückgerechnet werden.

Eine bevorzugte Ausführungsform des erfindungsgemässen Verfahrens ist dadurch gekennzeichnet, dass die Mischung der Gase in einem innerhalb des Heissgasraumes angeordneten und von diesem abgegrenzten Mischraum vorgenommen wird, dass das kühlere Gas von ausserhalb des Heissgasraumes mit erhöhtem Druck in den Mischraum injiziert wird, dass dem injizierten kühleren Gas heisse Gase aus dem Heissgasraum zugefügt und mit diesem vermischt werden, dass die entstehende Gasmischung zum Messen an dem im Mischraum angeordneten Thermoelement vorbeigeführt und anschliessend in den Heissgasraum ausgelassen wird. Hierdurch ist es möglich, die Messung in einer sehr kompakten Anordnung durchzuführen.

Die Messanordnung zur Durchführung des Verfahrens ist dadurch gekennzeichnet, dass innerhalb des Heissgasraumes, welcher durch eine Wand begrenzt ist, durch Abtrennmittel ein an die Wand angrenzender und sich quer zur Wand in den Heissgasraum erstreckender Mischraum abgetrennt ist, dass wenigstens eine Injektionsöffnung vorgesehen ist, durch welche das kühlere Gas von ausserhalb des Heissgasraumes durch die Wand in den Mischraum eingeführt bzw. eingedüst werden kann, dass am der Wand zugewandten Ende des Mischraumes in den Abtrennmitteln wenigstens eine Rezirkulationsöffnung vorgesehen ist, durch welche das heisse Gas aus dem Heissgasraum in den Mischraum eintreten kann, dass an dem der Wand abgewandten Ende des Mischraumes der Mischraum über einen Auslass mit dem Heissgasraum in Verbindung steht, und dass das Thermoelement im Mischraum in der Nähe des Auslasses angeordnet ist.

Eine bevorzugte Ausführungsform der Messanordnung nach der Erfindung zeichnet sich dadurch aus, dass die Abtrennmittel ein Injektionsrohr umfassen, welches konzentrisch zu einer Achse von der Wand ausgehend in den Heissgasraum hineinragt, dass das Thermoelement in der Achse angeordnet ist, dass über den Umfang des Injektionsrohres gleichmässig verteilt eine Mehrzahl von in radialer Richtung orientierten Rezirkulationsöffnungen im Injektionsrohr angeordnet sind, und dass in dem Teil der Wand, welcher innerhalb des Injektionsrohres liegt, auf einem Kreis gleichmässig verteilt eine Mehrzahl von in axialer Richtung orientierten Injektionsöffnungen vorgesehen sind. Hierdurch ergibt sich eine sehr gute Durchmischung der heissen und kühleren Gase.

Weitere Ausführungsformen ergeben sich aus den abhängigen Ansprüchen.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1 in einer perspektivischen Darstellung ein bevorzugtes Ausführungsbeispiel einer Messanordnung nach der Erfindung;

Fig. 2 die Messanordnung aus Fig. 1 in einem Längsschnitt (Fig. 2A) und einem Querschnitt (Fig. 2B);

Fig. 3 eine schematische Darstellung der Messanordnung aus Fig. 1 zur Ableitung der Berechnungsformeln; und

Fig. 4 ein beispielhaftes Diagramm für den Zusammenhang zwischen der gemessenen Temperatur der Gasmischung ($T_{MIX}$) und der tatsächlicher Temperatur ($T_{GAS}$) der zu messenden heissen Gase.

WEGE ZUR AUSFÜHRUNG DER ERFINDUNG

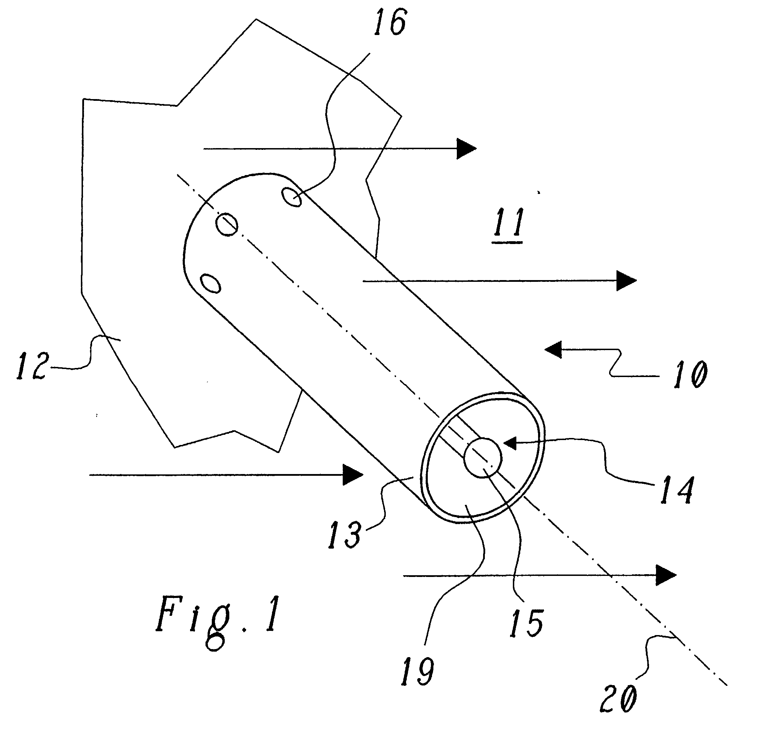

In Fig. 1 ist in einer perspektivischen Darstellung ein bevorzugtes Ausführungsbeispiel einer Messanordnung nach der Erfindung wiedergegeben. Die Messanordnung 10 befindet sich in einem Heissgasraum 11, der seitlich durch eine Wand 12 begrenzt ist (Wand 12 und Heissgasraum 11 sind nur ausschnittweise dargestellt). Durch den Heissgasraum 11 strömen in Richtung der eingezeichneten Pfeile heisse Verbrennungsgase, deren Temperatur gemessen werden soll. Quer zur Strömungsrichtung und quer zur Wand 12 ragt, von der Wand 12 ausgehend, ein konzentrisch zu einer Achse 20 angeordnetes Injektionsrohr 13 in den Heissgasraum 11 hinein (siehe auch Fig. 2A). Das innere des Injektionsrohres 13 bildet einen Mischraum 18 für die Vermischung von heissen und kühleren Gasen zu einer Gasmischung mit reduzierter Temperatur. Am der Wand 12 abgewandten Ende ist das Injektionsrohr 13 offen und die Oeffnung bildet für den Mischraum 18 einen Auslass 19 in den Heissgasraum 11. Das Injektionsrohr 13 selbst besteht aus einem hochtemperaturfesten Material, z.B. einer Keramik oder einer geeigneten Metalllegierung.

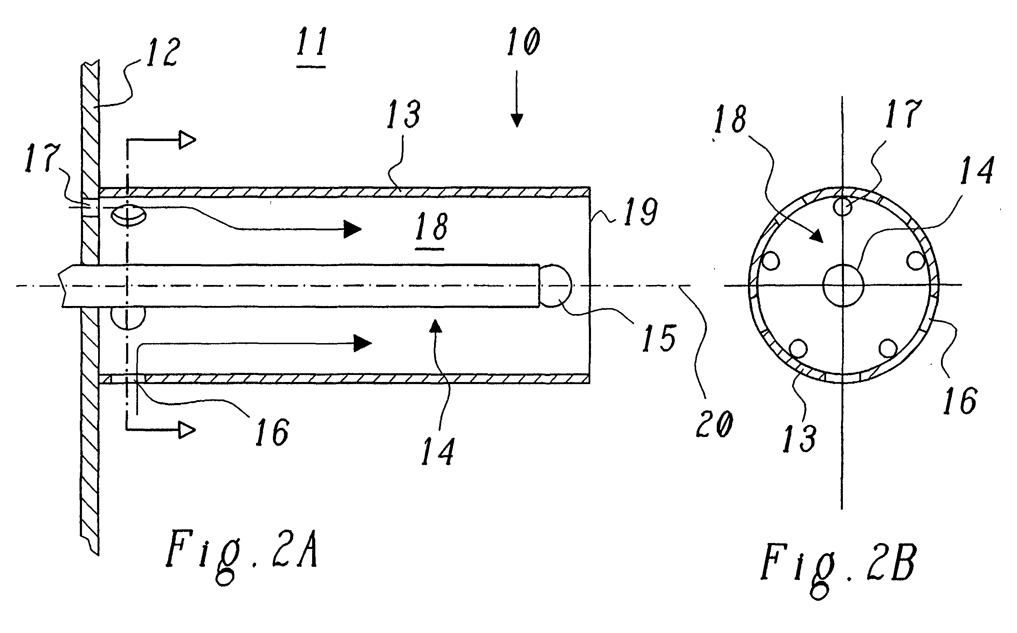

Zur Messung der im Mischraum sich bildenden Gasmischung ist innerhalb des Injektionsrohres 13 und in der Achse 20 liegend ein Thermoelement 14 angeordnet, welches mit seinen Zuleitungsdrähten durch die Wand 12 in den Mischungsraum 18 geführt ist und mit seiner temperaturempfindlichen Spitze 15 kurz vor dem Auslass 19 zu liegen kommt. Das Thermoelement 14 kann dabei ganz oder teilweise von einem Schutzrohr umgeben sein. Zur Zuführung des kühleren Gases von ausserhalb des Heissgasraumes 11 in den Mischraum 18 sind innerhalb des Injektionsrohres 13 in der Wand 12 auf einem Kreis liegend mehrere Injeküonsöffnungen 17 (Fig. 2A,B) vorgesehen, durch welche das kühlere Gas mit erhöhtem Druck in den Mischraum 18 injiziert wird. Ist der Heissgasraum 11 von einem sogenannten "Plenum" umgeben, wie dies bei Gasturbinen der Fall ist, wird als kühleres Gas die im Plenum vorhandene komprimierte Verbrennungsluft eingedüst. Unweit der Injektionsöffnungen 17 sind in der Wand des Injektionsrohres 13 über den Umfang verteilt Rezirkulationsöffnungen 16 vorgesehen, durch welche das zu messende heisse Gas aus dem Heissgasraum 11 in den Mischungsraum 18 einströmen kann.

Das heisse Gas wird dabei von den aus den Injektionsöffnungen 17 austretenden Injektionsstrahlen des kühleren Gases mitgerissen und vermischt sich mit dem kühleren Gas auf dem Weg zum Auslass 19. Es sind zur besseren Vermischung vorzugsweise gleiche Anzahlen von Injektionsöffnungen 17 und Rezirkulationsöffnungen 16 vorhanden und jeweils abwechselnd auf Lücke angeordnet (Fig. 2B). Die Länge des Injektionsrohres 13 und die Lage der Spitze 15 des Thermoelementes 14 im Injektionsrohr sind so gewählt, dass sich die beiden Gase aus den Oeffnungen 16 und 17 auf dem Weg zur Spitze 15 vollständig vermischt und eine gleichmässige Mischungstemperatur ausgebildet haben. Die Injektionsanordnung muss dabei dieselben Anforderungen erfüllen, wie sie z.B. an Abgasrückführungsinjektoren für Low-NOx-Brenner in Oefen gestellt werden.

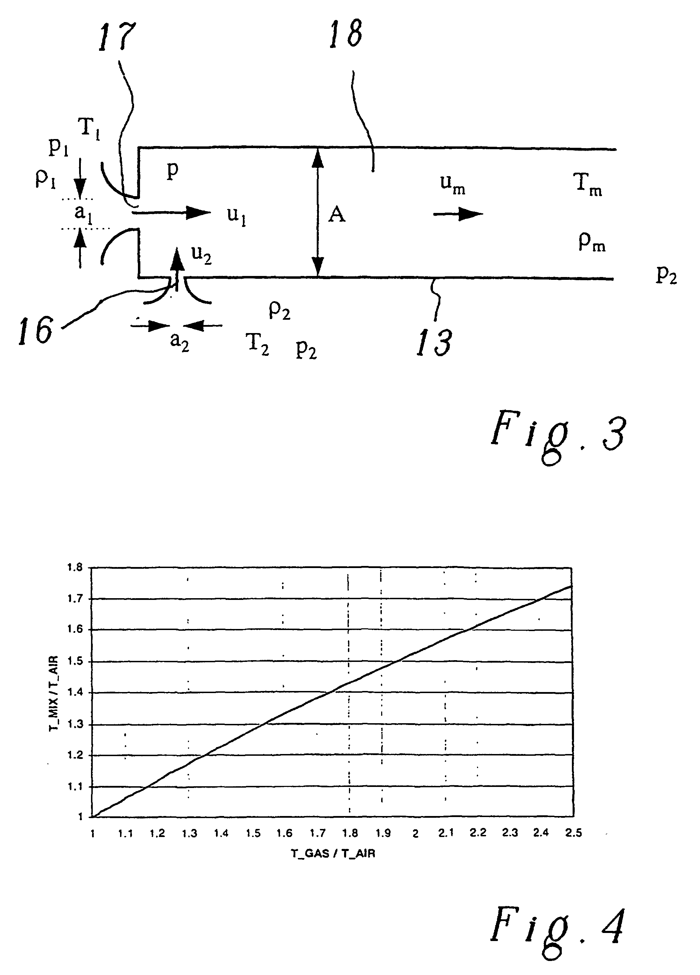

Die Injektionsanordnung gemäss Fig. 1 und 2 wird durch die in der schematischen Darstellung nach Fig. 3 angegebenen Parameter bestimmt. Ziel ist die Bestimmung der Temperatur $T_2$ des durch die seitliche Rezirkulationsöffnung 16 in den Mischraum 18 einströmenden heissen Gases. Um das Thermoelement nicht der extrem hohen Temperatur des heissen Gases auszusetzen, wird nach dem erfindungsgemässen Verfahren das heisse Gas mit einem kühleren Gas (Luft) der Temperatur $T_1$ gemischt und die (reduzierte) Mischtemperatur $T_m$ der Gasmischung gemessen. Aus dieser ge-

messenen Mischtemperatur $T_m$ kann dann die Temperatur $T_2$ des heissen Gases bestimmt werden. Die für diese Temperaturbestimmung notwendigen Eigenschaften der Injektoranordnung werden durch die folgenden Gleichungen beschrieben.

Für die beiden Einlassöffnungen, nämlich die Injektionsöffnung 17 und die Rezirkulationsöffnung 16, gelten die Bernoulli-Gleichungen

$$(1) \qquad p_1 = p + \frac{1}{2}\,\rho_1 u_1^2$$

und

$$(2) \qquad p_2 = p + \frac{1}{2}\,\rho_2 u_2^2$$

wobei $p_1$ und $p_2$ die Drücke des (treibenden) kühleren Gases und des (getriebenen) heissen Gases vor dem Eintritt in den Mischraum 18 sind; p ist der statische Druck an den Oeffnungen 16 und 17 innerhalb des Mischraumes 18; $\rho_1$ und $\rho_2$ sind die anfänglichen Dichten des kühleren und heissen Gases, und $u_1$ und $u_2$ sind die Strömungsgeschwindigkeiten des kühleren und heissen Gases in den Oeffnungen 17 und 16. Die Erhaltung des Massen- und Volumenstromes führt zu

$$(3) \qquad a_1\rho_1 u_1 + a_2\rho_2 u_2 = A\rho_m u_m$$

und

$$(4) \qquad a_1 u_1 + a_2 u_2 = A u_m$$

wobei $p_m$ und $u_m$ die Dichte und Strömungsgeschwindigkeit der Gasmischung, $a_1$ und $a_2$ die Querschnittsflächen der Oeffnungen 17 und 16, und A die Querschnittsfläche des Injektionsrohres 13 bzw. Mischraumes 18 bezeichnen. Schliesslich erfordert die Impulserhaltung, dass

$$(5) \qquad pA + \rho_1 u_1^2 a_1 = p_2 A + \rho_m u_m^2 A.$$

Aus der Zustandsgleichung ergibt sich ausserdem

$$(6) \qquad \rho_1 T_1 = \rho_2 T_2 = \rho_m T_m.$$

Mit Hilfe der Gleichungen (1) bis (6) kann dann $T_m/T_1$ als eine Funktion von $T_2/T_1$ bestimmt werden. Ein entsprechendes Diagramm für die Werte $a_1/A = 0{,}05$ und $a_2/A = 0{,}3$ ist in der Fig. 4 wiedergegeben, wobei $T\_AIR=T_1$, $T\_GAS=T_2$ und $T\_MIX=T_m$ gilt. Wird nun mit dem Thermoelement 14 ein Wert $T_m$ für die Gasmischung gemessen, kann für diesen Wert aus dem Diagramm von Fig. 4 der entsprechende Wert für $T\_GAS$ bzw. $T_2$ abgelesen werden. Dies kann beispielsweise automatisch in einem Rechner geschehen, der die Kurve aus Fig. 4 entweder in Form einer Tabelle abgespeichert hat, oder die Kurve durch eine Gleichung darstellt.

Eine wichtige Eigenschaft der Injektionsanordnung ist, dass das Verhältnis der Massenströme des heissen und kühleren Gases nicht vom Durchfluss abhängt, solange die Reynoldszahlen hinreichend gross sind. Aus diesem Grund hängt die in Fig. 4 dargestellte Beziehung zwischen den Temperaturen auch nicht vom Durchfluss ab. Auf der anderen Seite ist es aber wesentlich, dass die Drücke am Auslass 19 des Injektionsrohres 13 und an den Rezirkulationsöffnungen 16 gleich sind. Wenn die Messanordnung hohen Strömungsgeschwindigkeiten ausgesetzt ist, müssen daher spezielle Abschirmmassnahmen ergriffen werden, um sicherzustellen, dass die Drücke an den beiden Stellen der Anordnung gleich sind.

Insgesamt ergibt sich mit dem Verfahren und der Messanordnung die Möglichkeit, mit vergleichsweise einfachen Mitteln und nur wenig verringerter Genauigkeit eine sichere Temperaturmessung auch bei sehr hohen Temperaturen durchzuführen. Mit geeigneten Abschirmmassnahmen gegen hohe Strömungsgeschwindigkeiten können damit sogar Einlasstemperaturen bei Gasturbinen gemessen werden.

BEZUGSZEICHENLISTE

10  Messanordnung
11  Heissgasraum
12  Wand
13  Injektionsrohr
14  Thermoelement
15  Spitze (Thermoelement)
16  Rezirkulationsöffnung
17  Injektionsöffnung
18  Mischraum
19  Auslass
20  Achse

**Patentansprüche**

1. Verfahren zum Messen der Temperatur von in einem Heissgasraum (11), insbesondere in der Brennkammer von Gasturbinen, vorliegenden heissen Gasen mittels eines Thermoelementes (14), **dadurch gekennzeichnet, dass** ein Teil der zu messenden heissen Gase auf definierte Weise mit einem kühleren Gas vermischt wird, dass die Temperatur der Gasmischung mittels des Thermoelementes (14) gemessen wird, und dass aus der gemessenen Temperatur der Gasmischung die Temperatur der zu messenden heissen Gase bestimmt wird.

**2.** Verfahren nach Anspruch 1, **dadurch gekennzeichnet, dass** die Mischung der Gase in einem innerhalb des Heissgasraumes (11) angeordneten und von diesem abgegrenzten Mischraum (18) vorgenommen wird, dass das kühlere Gas von ausserhalb des Heissgasraumes (11) mit erhöhtem Druck in den Mischraum (18) injiziert wird, dass dem injizierten kühleren Gas heisse Gase aus dem Heissgasraum (11) zugefügt und mit diesem vermischt werden, dass die entstehende Gasmischung zum Messen an dem im Mischraum (18) angeordneten Thermoelement (14) vorbeigeführt und anschliessend in den Heissgasraum (11) ausgelassen wird.

**3.** Verfahren nach einem der Ansprüche 1 und 2, **dadurch gekennzeichnet, dass** als kühleres Gas Luft verwendet wird.

**4.** Messanordnung (10) zur Durchführung des Verfahrens nach Anspruch 1, **dadurch gekennzeichnet, dass** innerhalb des Heissgasraumes (11), welcher durch eine Wand (12) begrenzt ist, durch Abtrennmittel (13) ein an die Wand (12) angrenzender und sich quer zur Wand (12) in den Heissgasraum (11) erstreckender Mischraum (18) abgetrennt ist, dass wenigstens eine Injektionsöffnung (17) vorgesehen ist, durch welche das kühlere Gas von ausserhalb des Heissgasraumes (11) durch die Wand (12) in den Mischraum (18) eingeführt bzw. eingedüst werden kann, dass am der Wand (12) zugewandten Ende des Mischraumes (18) in den Abtrennmitteln (13) wenigstens eine Rezirkulationsöffnung (16) vorgesehen ist, durch welche das heisse Gas aus dem Heissgasraum (11) in den Mischraum (18) eintreten kann, dass an dem der Wand (12) abgewandten Ende des Mischraumes (18) der Mischraum (18) über einen Auslass (19) mit dem Heissgasraum (11) in Verbindung steht, und dass das Thermoelement (14) im Mischraum (18) in der Nähe des Auslasses (19) angeordnet ist.

**5.** Messanordnung nach Anspruch 4, **dadurch gekennzeichnet, dass** die Abtrennmittel ein Injektionsrohr (13) umfassen, welches konzentrisch zu einer Achse (20) von der Wand (12) ausgehend in den Heissgasraum (11) hineinragt, dass das Thermoelement (14) in der Achse (20) angeordnet ist, dass über den Umfang des Injektionsrohres (13) gleichmässig verteilt eine Mehrzahl von in radialer Richtung orientierten Rezirkulationsöffnungen (16) im Injektionsrohr (13) angeordnet sind, und dass in dem Teil der Wand (12), welcher innerhalb des Injektionsrohres (13) liegt, auf einem Kreis gleichmässig verteilt eine Mehrzahl von in axialer Richtung orientierten Injektionsöffnungen (17) vorgesehen sind.

**6.** Messanordnung nach Anspruch 5, **dadurch gekennzeichnet, dass** die Rezirkulationsöffnungen (16) und Injektionsöffnungen (17) als kreisrunde Löcher ausgebildet sind.

**7.** Messanordnung nach einem der Ansprüche 5 und 6, **dadurch gekennzeichnet, dass** eine gleiche Anzahl von Rezirkulationsöffnungen (16) und Injektionsöffnungen (17) vorgesehen sind, und dass die Rezirkulationsöffnungen (16) und Injektionsöffnungen (17) untereinander auf Lücke angeordnet sind.

**8.** Messanordnung nach einem der Ansprüche 5 bis 7, **dadurch gekennzeichnet, dass** die der Wand (12) abgewandte Oeffnung des Injektionsrohres (13) des Auslass (19) bildet.

## Claims

**1.** Method for measuring the temperature of hot gases present in a hot gas space (11), in particular in the combustion chamber of gas turbines, by means of a thermocouple (14), **characterized in that** a portion of the hot gases to be measured is mixed in a defined way with a cooler gas, **in that** the temperature of the gas mixture is measured by means of the thermocouple (14), and **in that** the temperature of the hot gases to be measured is determined from the measured temperature of the gas mixture.

**2.** Method according to Claim 1, **characterized in that** mixing the gases is undertaken in a mixing space (18) arranged inside the hot gas space (11) and delimited therefrom, **in that** the cooler gas from outside the hot gas space (11) is injected at increased pressure into the mixing space (18), **in that** hot gases from the hot gas space (11) are added to the injected cooler gas and mixed therewith, and **in that** for the purpose of measuring, the gas mixture produced is guided past the thermocouple (14) arranged in the mixing space (18), and subsequently let out into the hot gas space (11).

**3.** Method according to one of Claims 1 and 2, **characterized in that** air is used as the cooler gas.

**4.** Measuring arrangement (10) for carrying out method according to Claim 1, **characterized in that** a mixing space (18) extending transverse to the wall (12) into the hot gas space (11) and adjacent to the wall (12) is separated by separating means (13) inside the hot gas space (11), which is bounded by a wall (12), **in that** at least one injection opening (17) is provided through which the cooler gas can be introduced or injected from outside the hot gas space (11) through the wall (12) into the mixing space (18), **in that** there is provided at the end, facing the wall (12), of the mixing space (18) in the separating means (13) at least one recirculation opening (18), through which the hot gas can enter the mixing space (18) from the hot gas space (11), **in that** at the end, averted from the wall (12), of the mixing space (18), the mixing space (18) is connected to the hot gas space (11) via an outlet (19), and **in that** the thermocouple (14) is arranged in the mixing space (18) in the vicinity of the outlet (19).

5. Measuring arrangement according to Claim 4, **characterized in that** the separating means comprise an injection tube (13) which, proceeding from the wall (12) in a fashion concentric with an axis (20), projects into the hot gas space (11), **in that** the thermocouple (14) is arranged on the axis (20), **in that**, distributed uniformly over the circumference of the injection tube (13), a multiplicity of recirculation openings (16) orientated in the radial direction are arranged in the injection tube (13), and **in that**, arranged uniformly on a circle, a multiplicity of injection openings (17) orientated in the axial direction are provided in the part of the wall (12) which is situated inside the injection tube (13).

6. Measuring arrangement according to Claim 5, **characterized in that** the recirculation (16) and injection openings (17) are constructed as circular holes.

7. Measuring arrangement according to one of Claims 5 and 6, **characterized in that** an equal number of recirculation openings (16) and injection openings (17) are provided, and **in that** the recirculation openings (16) and injection openings (17) are arranged offset relative to one another.

8. Measuring arrangement according to one of Claims 5 to 7, **characterized in that** the opening of the injection tube (13) averted from the wall (12) forms the outlet (19).

### Revendications

1. Procédé de mesure de la température d'un gaz chaud qui se trouve dans un espace de gaz chaud (11) et en particulier dans la chambre de combustion de turbines à gaz, au moyen d'un thermoélément (14), **caractérisé en ce qu'**une partie du gaz chaud à mesurer est mélangée de manière définie avec un gaz plus froid, **en ce que** la température du mélange de gaz est mesurée au moyen du thermoélément (14) et **en ce que** la température du gaz chaud à mesurer est déterminée à partir de la température mesurée du mélange de gaz.

2. Procédé selon la revendication 1, **caractérisé en ce que** le mélange de gaz a lieu dans un espace de mélange (18) agencé dans l'espace de gaz chaud (11) et délimité par rapport à celui-ci, **en ce que** le gaz plus froid est injecté dans l'espace de mélange (18) à haute pression depuis l'extérieur de l'espace de gaz chaud (11), **en ce que** du gaz chaud de l'espace de gaz chaud (11) est ajouté au gaz plus froid injecté et est mélangé à celui-ci et **en ce que** pour le mesurer, on fait passer le mélange de gaz ainsi produit devant le thermoélément (14) agencé dans l'espace de mélange (18) et on le libère ensuite dans l'espace de gaz chaud (11).

3. Procédé selon l'une des revendications 1 à 2, **caractérisé en ce que** l'on utilise de l'air comme gaz plus froid.

4. Agencement de mesure (10) pour exécuter le procédé selon la revendication 1, **caractérisé en ce que** dans l'espace de gaz chaud (11) délimité par une paroi (12), un espace de mélange (18) adjacent à la paroi (12) et qui s'étend dans l'espace de gaz chaud (11) transversalement par rapport à la paroi (12) est séparé par un moyen de séparation (13), **en ce qu'**au moins une ouverture d'injection (17) par laquelle on peut introduire ou injecter depuis l'extérieur de l'espace de gaz chaud (11) le gaz plus froid dans l'espace de mélange (18) à travers la paroi (12) est prévue, **en ce qu'**au moins une ouverture de recirculation (16) par laquelle le gaz chaud de l'espace de gaz chaud (11) peut pénétrer dans l'espace de mélange (18) est prévue dans les moyens de séparation (13) sur l'extrémité de l'espace de mélange (18) orientée vers la paroi (12), **en ce qu'**à l'extrémité de l'espace de mélange (18) qui n'est pas tournée vers la paroi (12), l'espace de mélange (18) est relié à l'espace de gaz chaud (11) par une sortie (19) et **en ce que** le thermoélément (14) est agencé dans l'espace de mélange (18) à proximité de la sortie (19).

5. Agencement de mesure selon la revendication 4, **caractérisé en ce que** les moyens de séparation comprennent un tube d'injection (13) qui, partant de la paroi (12), pénètre dans l'espace de gaz chaud (11) concentriquement par rapport à un axe (20), **en ce que** le thermoélément (14) est agencé sur l'axe (20), **en ce que** plusieurs ouvertures de recirculation (16) orientées radialement et régulièrement réparties sur le pourtour du tube d'injection (13) sont ménagées dans le tube d'injection (13) et **en ce que** plusieurs ouvertures d'injection (17) orientées axialement et régulièrement réparties sur un cercle sont prévues dans la partie de la paroi (12) située dans le tube d'injection (13).

6. Agencement de mesure selon la revendication 5, **caractérisé en ce que** les ouvertures de recirculation (16) et les ouvertures d'injection (17) sont configurées en trous circulaires.

7.  Agencement de mesure selon l'une des revendications 5 et 6, **caractérisé en ce que** l'on prévoit les mêmes nombres d'ouvertures de recirculation (16) et d'ouvertures d'injection (17) et **en ce que** les ouvertures de recirculation (16) et les ouvertures d'injection (17) sont agencées en alternance les unes par rapport aux autres.

8.  Agencement de mesure selon l'une des revendications 5 à 7, **caractérisé en ce que** l'ouverture du tube d'injection (13) qui n'est pas orientée vers la paroi (12) forme la sortie (19).

Fig.1

EP 0 949 492 B1

Fig. 2A

Fig. 2B

EP 0 949 492 B1

*Fig.3*

*Fig.4*